# EUROPEAN PATENT APPLICATION

(11) **EP 2 412 961 A1**
(43) Date of publication of application: **01.02.2012**
(21) Application number: 09842213.2
(22) Date of filing: 25.03.2009
(51) Int. Cl.: F02M 37/00, F02M 21/02, F02M 25/00

(54) **CONTROLLER FOR INTERNAL COMBUSTION ENGINE**

(71) Applicant: Toyota Jidosha Kabushiki Kaisha, Toyota-shi, Aichi 471-8571 (JP)
(72) Inventor: MIYAGAWA, Hiroshi, Aichi-gun Aichi 480-1192 (JP); KOIKE, Makoto, Aichi-gun Aichi 480-1192 (JP)
(74) Representative: TBK
(86) International application number: PCT/JP2009/055910
(87) International publication number: WO 2010/109599

(57) **Abstract**

An internal combustion engine (10) utilizes, as a fuel, ammonia and gasoline (combustion-supporting fuel) for promoting combustion of ammonia. Ammonia is injected from an ammonia injector (22) into an intake pipe (20), and gasoline is injected from a gasoline injector (24) into the intake pipe (20). An electronic controller (40) for control of driving of the ammonia injector (22) and the gasoline injector (24) changes the distribution of injection of ammonia and combustion-supporting fuel according to the change of any one or both of the rotation speed and the load of the internal combustion engine (10).

## Description

### TECHNICAL FIELD

The present invention relates to a controller for an internal combustion engine, and more particularly to an apparatus which performs control of an internal combustion engine that utilizes, as a fuel, ammonia and a combustion-supporting fuel for promoting combustion of the ammonia.

### BACKGROUND ART

Internal combustion engines which utilize ammonia (NH₃) as a fuel other than a petroleum fuel have been proposed. Technologies related to these internal combustion engines are disclosed in Patent Literature 1 and Non-Patent Literature 1 indicated below. While the use of ammonia as a fuel of an internal combustion engine allows reduction in discharge of carbon dioxide (CO₂) when compared with petroleum fuels such as gasoline, ammonia has a slower combustion rate and is more difficult to ignite. In Patent Literature 1, heat of exhaust gas after combustion is used to decompose ammonia, thereby generating hydrogen gas, and the hydrogen gas is introduced into an auxiliary chamber to cause initial combustion, thereby promoting combustion of ammonia within a combustion chamber.

### Patent Literaturel: JP 5-332152 A

Non-Patent Literature 1: Shawn M. Grannenell et al. "THE OPERATING FEATURES OF A STOICHIOMETRIC, AMMONIA AND GASOLINE DUAL FUELED SPARK IGNITION ENGINE", IMECE 2006-13048, 2006 ASME International Mechanical Engineering Congress and Exposition, 2006

### DISCLOSURE OF THE INVENTION

### Technical Problems

In an internal combustion engine, in order to perform a stable operation while suppressing variations of combustion, it is necessary to burn a fuel at a combustion rate which is sufficient for completing the combustion while a piston is located near top dead center. However, the combustion rate of a fuel is affected not only by a type of the fuel but also by the operating conditions of the internal combustion engine. In an internal combustion engine which utilizes, as a fuel, ammonia and a fuel for supporting combustion, when the operating condition thereof changes to lower the combustion rate, the ratio of usage amount of ammonia whose combustion rate is slow becomes excessive, leading to an increase in variations of combustion, making it difficult to perform a stable operation. When the operating condition of the internal combustion engine changes to increase the combustion rate of the fuel, on the other hand, the ratio of usage amount of ammonia whose combustion rate is slow becomes insufficient, possibly leading to restricting the usage efficiency of ammonia or causing knocking and making it difficult to perform a stable operation. In Patent Literature 1, distribution of usage of ammonia and hydrogen is not indicated, which possibly leading to difficulty in achieving stable combustion, depending on the operating conditions of the internal combustion engine.

The prevent invention is aimed at providing a controller for an internal combustion engine, which is capable of realizing a stable operation of the internal combustion engine with suppressed variations of combustion while increasing the ratio of usage of ammonia.

### Solution to Problems

A controller for an internal combustion engine according to the present invention is an apparatus which performs control of an internal combustion engine that utilizes, as a fuel, ammonia and a combustion-supporting fuel for promoting combustion of the ammonia and includes a fuel distribution control unit which changes distribution of usage of ammonia and the combustion-supporting fuel in accordance with a change in an operating condition of the internal combustion engine. The operating condition of the internal combustion engine can include a rotation speed and a load of the internal combustion engine, and the fuel distribution control unit can change the distribution of usage of the ammonia and the combustion-supporting fuel in accordance with a change in any one or both of the rotation speed and the load of the internal combustion engine.

According to an aspect of the present invention, with a decrease in the rotation speed of the internal combustion engine, the fuel distribution control unit preferably increases the ratio of usage of the ammonia and decreases the ratio of usage of the combustion-supporting fuel. Further, according to another aspect of the present invention, with an increase in the load of the internal combustion engine, the fuel distribution control unit preferably increases the ratio of usage of ammonia and decreases the ratio of usage of the combustion-supporting fuel.

In accordance with a further aspect of the present invention, the combustion-supporting fuel preferably includes any one or more of hydrogen, a hydrocarbon fuel, and an alcohol fuel.

### Advantageous Effects of Invention

According to the present invention, by changing the distribution of usage of ammonia and a combustion-supporting fuel in accordance with a change of the operating condition of the internal combustion engine, it is possible to realize a stable operation with suppressed variations of combustion of the internal combustion engine while increasing the ratio of usage of ammonia.

### BRIEF DESCRIPTION OF THE DRAWINGS

[FIG. 1] A view schematically illustrating a structure of a controller and an internal combustion engine to be controlled according to an embodiment of the present invention.
[FIG. 2] A view illustrating a result of a change of the combustion rate obtained by calculation when the ratio of usage of a combustion-supporting fuel is changed with respect to ammonia.
[FIG. 3] A view illustrating an experimental result of a characteristic of variations of combustion with respect to the ratio of injection of ammonia, which is examined while changing the rotation speed of the internal combustion engine.
[FIG. 4] A view illustrating an experimental result of a characteristic of variations of combustion with respect to the ratio of injection of ammonia, which is examined while changing the load of the internal combustion engine.
[FIG. 5] A view illustrating an experimental result of a change in the thermal efficiency which is obtained when the ratio of injection of ammonia is changed under the high-load operating condition.
[FIG. 6] A view illustrating an example characteristic map indicating a relationship of the ratio of injection of ammonia with respect to the operating conditions of the internal combustion engine.
[FIG. 7] A view schematically illustrating another structure of a controller and an internal combustion engine to be controlled according to the embodiment of the present invention.
[FIG. 8] A view schematically illustrating still another structure of a controller and an internal combustion engine to be controlled according to the embodiment of the present invention.

### REFERENCE SYMBOLS LIST

10 internal combustion engine, 11 cylinder, 12 ammonia tank, 14 gasoline tank, 15 ethanol tank, 20 intake pipe, 21 exhaust pipe, 22 ammonia injector, 24 gasoline injector, 25 ethanol injector, 30 exhaust catalyst, 31 ammonia decomposer, 33 decomposed gas injection valve, 40 electronic control unit.

### BEST MODE FOR CARRYING OUT THE INVENTION

A preferred embodiment of the present invention will be described with reference to the drawings.

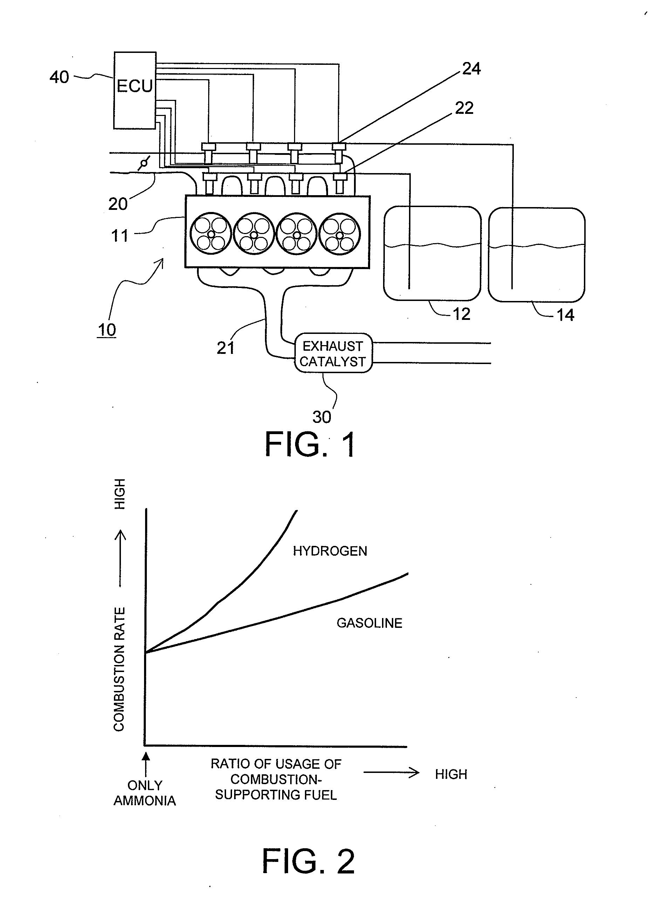

FIG. 1 is a view schematically illustrating the structure of a controller according to the present embodiment together with an internal combustion engine to be controlled. The internal combustion engine utilizes, as a fuel, ammonia (a first fuel) and a combustion-supporting fuel (a second fuel) for promoting combustion of the ammonia. FIG. 1 illustrates an example in which gasoline (a hydrocarbon fuel) is used as the combustion-supporting fuel.

Ammonia (NH₃) is stored in an ammonia tank 12 and gasoline is stored in a gasoline tank 14. The ammonia stored in the ammonia tank 12 is supplied to ammonia injectors 22 by a pump, and the gasoline stored in the gasoline tank 14 is supplied to gasoline injectors 24 by a pump. The ammonia injectors 22 located within an intake pipe 20 inject the ammonia supplied from the ammonia tank 12 into the intake pipe 20, and the gasoline injectors 24 located within the intake pipe 20 inject the gasoline supplied from the gasoline tank 14 into the intake pipe 20. The ammonia and gasoline injected from the ammonia injectors 22 and the gasoline injectors 24, respectively, are introduced into a cylinder 11 along with air during the intake stroke. The internal combustion engine 10 combusts a mixture of the fuels (ammonia and gasoline) and air within the cylinder 11 to thereby generate power. The exhaust gas after the combustion is discharged into an exhaust pipe 21 from within the cylinder 11 during the exhaust stroke, and is purified by an exhaust catalyst 30 which is provided as an exhaust purifier. The exhaust gas after the combustion contains nitrogen oxide (NOx), unburned ammonia, and the like, and the nitrogen oxide (NOx), unburned ammonia, and the like are purified by the exhaust catalyst 30.

While FIG. 1 illustrates an example in which ammonia and the combustion-supporting fuel (gasoline) are injected into the intake pipe 20, it is also possible to dispose the ammonia injectors 22 within the cylinder 11 for injecting ammonia directly into the cylinder 11 and/or to dispose the gasoline injectors 24 within the cylinder 11 for injecting gasoline directly into the cylinder 11. Further, it is also possible to ignite the air-fuel mixture within the cylinder 11 by spark discharge of a spark plug to burn the air-fuel mixture within the cylinder 11 by flame propagation, or to burn the fuels (ammonia and the combustion-supporting fuel) within the cylinder 11 by compression auto-ignition.

An electronic control unit (ECU) 40 is configured as a microprocessor which is formed mainly by a CPU, and includes a ROM for storing a processing program, a RAM for temporarily storing data, and an input/output port. A signal indicative of the rotation speed of the internal combustion engine, a signal indicative of the degree of opening of a throttle, or the like detected by sensors which are not illustrated, are input to the electronic control unit 40 via the input port. Meanwhile, an ammonia injection control signal for performing driving control of the ammonia injectors 22, a gasoline injection control signal for performing driving control of the gasoline injectors 24, and the like, are output from the electronic control unit 40 via the output port. The electronic control unit 40 computes a target total injection amount and a target distribution of injection of the fuels based on the rotation speed of the internal combustion engine 10 and the degree of opening of the throttle, and controls driving of the ammonia injectors 22 and the gasoline injectors 24, respectively, such that the total injection amount and the distribution of injection of the fuels correspond to the target total injection amount and the target distribution of injection, respectively, thereby controlling the injection amount (usage amount) of ammonia and the injection amount (usage amount) of gasoline. Consequently, the distribution of injection (distribution of usage) of ammonia and gasoline (the combustion-supporting fuel) can be controlled.

While ammonia is a substance whose combustion rate is slower and which is more difficult to ignite when compared to hydrocarbon fuels such as gasoline, combustion of ammonia can be promoted by burning a combustion-supporting fuel (which is gasoline in the example illustrated in FIG. 1) in addition to ammonia within the cylinder 11. FIG. 2 illustrates a result of calculation of a change in the combustion rate when the ratio of usage of the combustion-supporting fuel is changed with respect to ammonia. Specifically, FIG. 2 illustrates a result of calculation of the combustion rate when gasoline is used as the combustion-supporting fuel and a result of calculation of the combustion rate when hydrogen is used as the combustion-supporting fuel. As illustrated in FIG. 2, it can be understood that the combustion rate can be increased by increasing the ratio of usage of the combustion-supporting fuel (i.e. by decreasing the ratio of usage of ammonia).

In an internal combustion engine, in order to perform a stable operation while suppressing variations in combustion, it is necessary to burn the fuel at a flame propagation rate which is sufficient for completing the combustion while the piston is located near top dead center. However, the flame propagation rate is affected not only by a type of the fuel but also by the operating conditions of the internal combustion engine. When, as a result of a change of the operating conditions of the internal combustion engine, the ratio of usage of ammonia is much greater than that at which the necessary flame propagation rate can be obtained, the combustion rate becomes slow to thereby increase the variations in combustion, making it difficult to perform a stable operation. When the ratio of usage of ammonia is much lower than that at which the necessary flame propagation rate can be obtained, on the other hand, there is a possibility that the usage efficiency of ammonia is restricted or knocking occurs, thereby making it difficult to perform a stable operation.

Accordingly, in the present embodiment, the electronic control unit 40 performs driving control for each of the ammonia injectors 22 and the gasoline injectors 24 such that the distribution of injection (distribution of usage) of ammonia and the combustion-supporting fuel is changed in accordance with a change of the operating conditions of the internal combustion engine 10. The operating conditions of the internal combustion engine 10 in this example can include the rotation speed and the load of the internal combustion engine 10, and the electronic control unit 40 changes the distribution of usage of ammonia and the combustion-supporting fuel in accordance with the change in one or both of the rotation speed and the load of the internal combustion engine 10. Thus, a stable operation with suppressed variations in combustion of the internal combustion engine 10 is realized while increasing the usage efficiency of ammonia. The rotation speed of the internal combustion engine 10 can be detected by a rotation speed sensor which is not illustrated, for example, and the load of the internal combustion engine 10 can be obtained from the degree of opening of a throttle or a target total injection amount of the fuel, for example. The control of the distribution of injection of ammonia and the combustion-supporting fuel will be described in detail below.

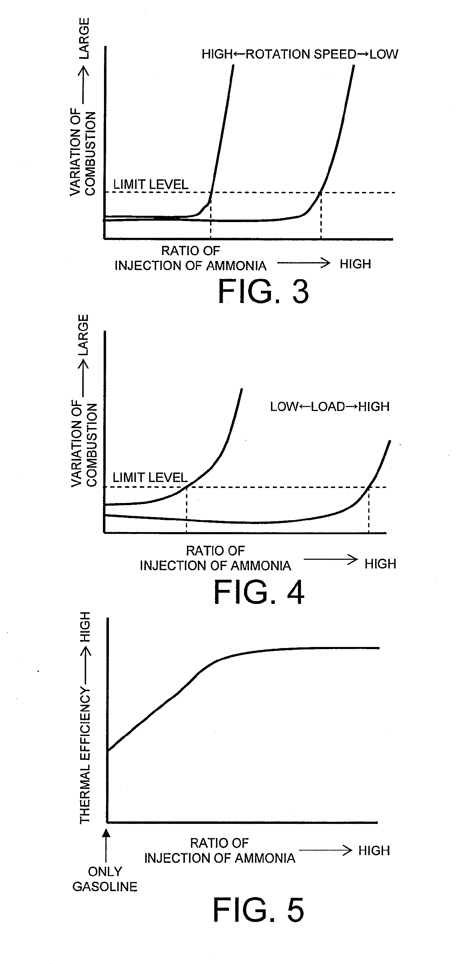

The experimental results of the change in the variations of combustion when the ratio of injection of ammonia is changed are illustrated in FIGs. 3 and 4. Specifically, FIG. 3 illustrates an experimental result of the characteristic of variations of combustion (variations of torque) with respect to the ratio of injection of ammonia, which is obtained while changing the rotation speed of the internal combustion engine, and FIG. 4 illustrates an experimental result of the characteristic of variations of combustion (variations of torque) with respect to the ratio of injection of ammonia, which is obtained while changing the load (torque) of the internal combustion engine. In the experimental results illustrated in FIGs. 3 and 4, a stable operation of the internal combustion engine becomes difficult when the variations of combustion exceed the limit level.

As illustrated in FIG. 3, it can be understood that, at any rotation speed, if the ratio of injection of ammonia is a certain degree or higher, the variations of combustion exceed the limit level, making it difficult to ensure a stable operation of the internal combustion engine. It can also be understood that the higher the rotation speed of the internal combustion engine, the lower the ratio of injection of ammonia at which the variations of combustion reach the limit level (i.e., the lower the rotation speed of the internal combustion engine, the higher the ratio of injection of ammonia at which the variations of combustion reach the limit level). Under the operating condition in which the rotation speed of the internal combustion engine is low, when compared to the operating condition in which the rotation speed of the internal combustion engine is high, the moving speed of the piston is lower, so that a relatively longer time can be obtained for combustion. Accordingly, it can be seen from the experimental result illustrated in FIG. 3 that, under the operating condition in which the rotation speed of the internal combustion engine is low, it is possible to suppress the variations of combustion to the limit level or lower even if the ratio of injection of ammonia is set higher and the combustion rate of the fuel is lower than under the operating condition in which the rotation speed of the internal combustion engine is high. On the other hand, it can be seen from experimental result illustrated in FIG. 3 that, under the operating condition in which the rotation speed of the internal combustion engine is high, the variations of combustion cannot be suppressed to the limit level or lower unless the ratio of injection of ammonia is set lower to increase the combustion rate of the fuel as compared with that under the operating condition in which the rotation speed of the internal combustion engine is low. Therefore, according to the present embodiment, the electronic control unit 40 performs driving control of each of the ammonia injectors 22 and the gasoline injectors 24 such that, with respect to a decrease in the rotation speed of the internal combustion engine 10, the ratio of injection of ammonia is increased and the ratio of injection of the combustion-supporting fuel is decreased. In this manner, it is possible to control the distribution of injection of ammonia and the combustion supporting fuel such that even if the rotation speed of the internal combustion engine 10 changes, the variations of combustion (variations of torque) can be suppressed to the limit level or lower while increasing the usage efficiency of ammonia.

As illustrated in FIG.4, it can be understood that, at any load (torque), if the ratio of injection of ammonia is a certain degree or higher, the variations of combustion exceed the limit level, making it difficult to ensure a stable operation of the internal combustion engine. It can also be understood that the higher the load of the internal combustion engine, the higher the ratio of injection of ammonia at which the variations of combustion reach the limit level (i.e. the lower the load of the internal combustion engine, the lower the ratio of injection of ammonia at which the variations of combustion reach the limit level). Under the operating condition in which the load of the internal combustion engine is high, when compared to the operating condition in which the load of the internal combustion engine is low, the pressure within the cylinder increases so that combustion is promoted to increase the flame propagation speed. Accordingly, it can be seen from the experimental result illustrated in FIG. 4 that, under the operating condition in which the load of the internal combustion engine is high, it is possible to suppress the variations of combustion to the limit level or lower even if the ratio of injection of ammonia is set higher to decrease the combustion rate of the fuel as compared with that in the operating condition in which the load of the internal combustion engine is low. On the other hand, it can be seen from experimental result illustrated in FIG. 4 that, under the operating condition in which the load of the internal combustion engine is low, the variations of combustion cannot be suppressed to the limit level or lower unless the ratio of injection of ammonia is set lower to increase the combustion ratio of the fuel as compared with that in the operating condition in which the load of the internal combustion engine is high. Therefore, according to the present embodiment, the electronic control unit 40 performs driving control of each of the ammonia injectors 22 and the gasoline injectors 24 such that, with respect to an increase in the load of the internal combustion engine 10, the ratio of injection of ammonia is increased and the ratio of injection of the combustion-supporting fuel is decreased. In this manner, the distribution of injection of ammonia and the combustion supporting fuel can be controlled such that, even if the load of the internal combustion engine 10 changes, the variations of combustion (variations of torque) can be suppressed to the limit level or lower while increasing the usage efficiency of ammonia.

Further, while ammonia has a characteristic of reducing the flame propagation rate, it has an advantage of suppressing rapid combustion such as knocking. As knocking causes a problem especially under the operating condition with low speed and high load, by increasing the ratio of injection of ammonia under such an operating condition, occurrence of knocking can be suppressed to thereby increase thermal efficiency. FIG. 5 illustrates an experimental result of a change in the thermal efficiency when the ratio of injection of ammonia is changed under the high load operating condition. As illustrated in FIG. 5, it can be seen that, while the thermal efficiency is restricted by knocking when the ratio of injection of ammonia is low, if the ratio of injection of ammonia is sufficiently high, knocking can be suppressed so that thermal efficiency can be increased.

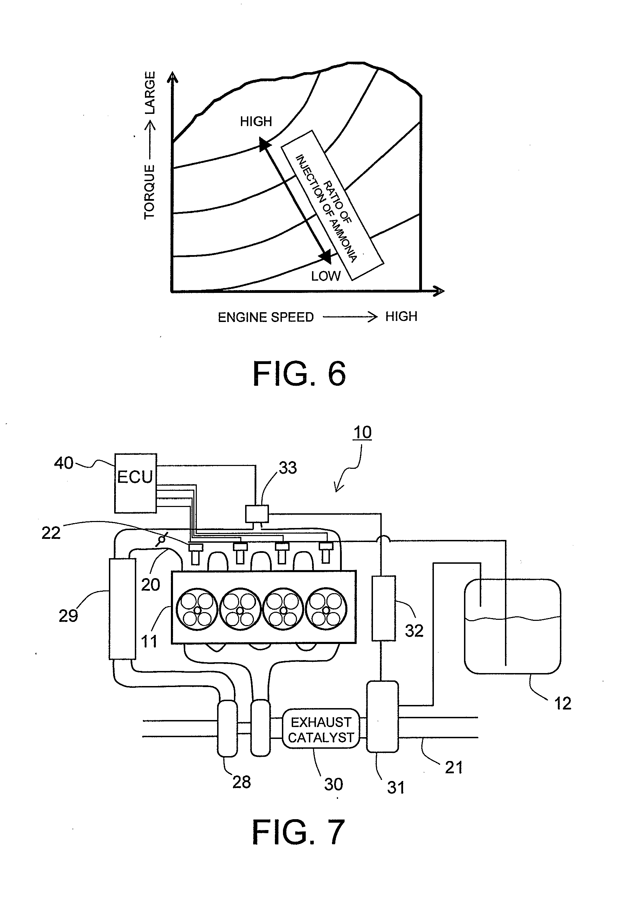

FIG. 6 illustrates an example characteristic map representing a relationship of the ratio of injection of ammonia with respect to the operating conditions (the rotation speed and load) of the internal combustion engine 10, which is created based on the experimental results described above. In the characteristic map illustrated in FIG. 6, the ratio of injection of ammonia with respect to the rotation speed and the torque of the internal combustion engine 10 is set such that the ratio of injection of ammonia can be maximized under the condition in which the variations of combustion (variations of torque) are suppressed to the limit level or less. In the characteristic map illustrated in FIG. 6, the ratio of injection of ammonia is decreased with the increase in the rotation speed of the internal combustion engine 10, and the ratio of injection of ammonia is decreased with the decrease in the torque of the internal combustion engine 10. This characteristic map is stored in a storage device within the electronic control unit 40. The electronic control unit 40 calculates a target ratio of injection of ammonia corresponding to the given rotation speed and torque of the internal combustion engine 10 in this characteristic map, and controls distribution of injection of ammonia and the combustion-supporting fuel such that the ratio of injection of ammonia conforms to the target ratio of injection. In this manner, it is possible to control the distribution of injection of ammonia and the combustion-supporting fuel such that the variations of combustion (variations of torque) can be suppressed to the limit level or less.

As described above, according to the present embodiment, by changing the distribution of injection of ammonia and the combustion-supporting fuel in accordance with the change in the operating state (the rotation speed and torque) of the internal combustion engine 10, a stable operation with suppressed variations of combustion of the internal combustion engine 10 can be realized while increasing the ratio of usage of ammonia. In addition, occurrence of knocking can be suppressed to thereby achieve an increase in thermal efficiency.

Other example structures according to the present embodiment will be further described.

FIG. 7 illustrates an example in which hydrogen (H₂) is used as a combustion-supporting fuel. Specifically, FIG. 7 illustrates an example of a turbocharged engine including a turbocharger 28 and an intercooler 29, in which an ammonia decomposition unit 31 is disposed in the exhaust pipe 21 downstream of the exhaust catalyst 30. The ammonia decomposition unit 31 uses heat of the exhaust gas after combustion which is discharged within the exhaust pipe 21 to decompose ammonia supplied from the ammonia tank 12, thereby producing hydrogen. The hydrogen (decomposed gas) produced by the ammonia decomposition unit 31 is cooled by a cooler 32 and is then supplied to a decomposed gas injection valve 33 which injects the hydrogen into the intake pipe 20. According to the present embodiment, it is also possible to produce hydrogen by reforming ammonia by means of plasma, for example. The electronic control unit 40 controls driving of each of the ammonia injectors 22 and the decomposed gas injection valve 33 to thereby control the amount of injection of ammonia and the amount of injection of hydrogen, thereby controlling the distribution of injection (distribution of usage) of ammonia and hydrogen. In the case of using hydrogen as the combustion-supporting fuel, because the combustion rate increasing effect of hydrogen is great as illustrated in FIG. 2, a stable operation of the internal combustion engine 10 with suppressed variations of combustion can be realized by adding a smaller amount of hydrogen, so that the usage efficiency of ammonia can be further increased.

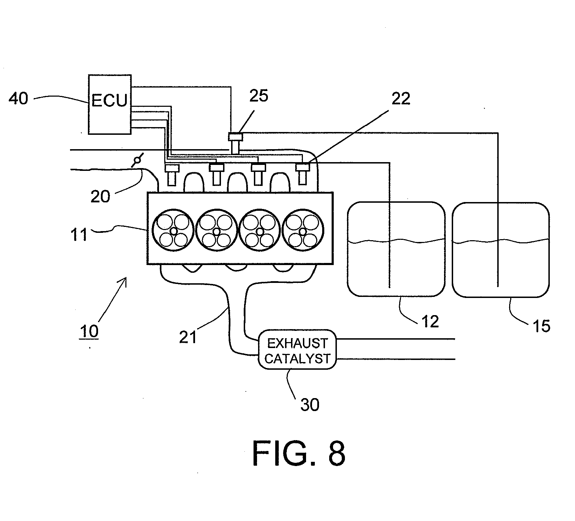

Further, FIG. 8 illustrates an example in which ethanol (alcoholic fuel) is used as a combustion-supporting fuel. In the example structure illustrated in FIG. 8, ethanol stored in an ethanol tank 15 is injected into the intake pipe 20 through an ethanol injector 25. The electronic control unit 40 controls driving of each of the ammonia injectors 22 and the ethanol injector 25 to thereby control the amount of injection of ammonia and the amount of injection of ethanol, thereby controlling the distribution of injection (distribution of usage) of ammonia and ethanol. Because the octane number of ethanol is higher than that of gasoline, in the case of using ethanol as a combustion-supporting fuel, the knock resistance can be increased in conjunction with the use of ammonia, thereby achieving a higher compression ratio.

Also, according to the present embodiment, it is also possible to use diesel fuel (hydrocarbon fuel) as a combustion-supporting fuel. In addition, it is possible to use a plurality of types of fuels as a combustion-supporting fuel, and a hydrocarbon fuel (such as gasoline or diesel fuel), hydrogen, and an alcoholic fuel (such as ethanol) can be used in combination, for example. All of hydrogen, gasoline, diesel fuel, and ethanol are easier to ignite than ammonia, and the combustion rates thereof are higher than that of ammonia. Accordingly, these are preferable combustion-supporting fuels for increasing the combustion rate of ammonia.

While some examples for implementing the present invention have been described, the present invention is not limited to these examples. It is therefore obvious that the present invention can be implemented in various forms without departing from the scope of the present invention.

## Claims

1. A controller for an internal combustion engine for controlling an internal combustion engine which utilizes, as a fuel, ammonia and a combustion-supporting fuel for promoting combustion of the ammonia,
the controller comprising:
a fuel distribution control unit which changes distribution of usage of the ammonia and the combustion-supporting fuel in accordance with a change in an operating condition of the internal combustion engine.

2. The controller for an internal combustion engine according to Claim 1, wherein
with a decrease in a rotation speed of the internal combustion engine, the fuel distribution control unit increases a ratio of usage of the ammonia and decreases a ratio of usage of the combustion-supporting fuel.

3. The controller for an internal combustion engine according to Claim 1, wherein
with an increase in a load of the internal combustion engine, the fuel distribution control unit increases a ratio of usage of ammonia and decreases a ratio of usage of the combustion-supporting fuel.

4. The controller for an internal combustion engine according to Claim 1, wherein
the combustion-supporting fuel includes any one or more of hydrogen, a hydrocarbon fuel, and an alcohol fuel.
